# EUROPÄISCHE PATENTSCHRIFT

(11) **EP 2 366 370 B1**
(45) Veröffentlichungstag und Bekanntmachung des Hinweises auf die Patenterteilung: **06.01.2016**
(21) Anmeldenummer: 11157998.3
(22) Anmeldetag: 14.03.2011
(51) Int. Cl.: A61G 5/10, A61G 1/007, B62B 19/02

(54) **FAHR- UND LENKHILFE FÜR UNBEFESTIGTEN UNTERGRUND**
DRIVING AND STEERING AID FOR SOFT GROUND
AIDE A LA CONDUITE ET A LA DIRECTION POUR SOL MEUBLE

(30) Priorität: 17.03.2010 CH 3742010; 21.10.2010 CH 17342010
(43) Veröffentlichungstag der Anmeldung: 21.09.2011
(73) Patentinhaber: Mayer, Patrick, 7208 Malans (CH)
(72) Erfinder: Mayer, Patrick, 7208 Malans (CH)
(74) Vertreter: Schneider Feldmann AG Patent- und Markenanwälte

(56) Entgegenhaltungen:
- DE-A1- 19 513 993
- DE-A1- 19 610 653
- DE-U- 6 940 511
- GB-A- 191 028 829
- US-A- 2 523 950
- US-A- 3 070 383

## Beschreibung

### Technisches Gebiet

Die vorliegende Erfindung beschreibt eine Fahr- und Lenkhilfe, umfassend ein Radaufnahmegehäuse, welches von einer Kufe mit einer Lauffläche von einer Oberfläche der Kufe (21) wegragend angeordnet ist, sodass ein Rad vom Untergrund getrennt beabstandet anordbar ist, womit das Gleiten über einen weichen oder losen Untergrund erreichbar ist.

### Stand der Technik

Die Nutzung von zweirädrigen oder mehrrädrigen Fahrzeugen, beispielsweise von Gehhilfen, Kinderwagen, Kinderfahrzeugen oder von Rollstühlen auf unwegsamem weichen und unbefestigtem Untergrund, beispielsweise auf Sand oder auch Schnee, ist mit handelsüblichen Fahrzeugen nur schwer bzw. gar nicht möglich. Durch das Einsinken der Räder sind die handelsüblichen Fahrzeuge weder manuell durch die Muskelkraft des Benutzers noch durch Anschieben einer Begleitperson richtig steuerbar und fortbewegbar.

Beispielhaft ist ein Rollstuhl in der DE19724024 offenbart, bei welchem Um- und Anbauten in Form von Fahr- und Lenkhilfen vorgesehen sind, welche die Fortbewegung eines Rollstuhls auf den erwähnten Untergründen erleichtern, wobei diese Fahr- und Lenkhilfen leicht vor Ort montier-/demontierbar sind. Es werden Kufen offenbart, welche an den Lenkrädern montierbar sind und die Auflageflächen des Rollstuhls auf dem unwegsamen Untergrund vergrössern. Damit wird die Einsinktiefe der Lenkräder verringert und die Fortbewegung erleichtert. Es wird aber nicht weiter beschrieben, wie die Kufen an den Lenkrädern befestigt werden, damit weiterhin eine Lenkung des Rollstuhls erreichbar ist. Gemäss einer Figur der DE19724024 und der Beschreibung ist die Funktion der Lenkräder auch bei montierten Kufen weiterhin eingeschränkt erhalten und die Lenkräder damit weiterhin in Kontakt mit dem Untergrund. Es wird nicht deutlich wie die Kufen geformt sein können und die Befestigung der Kufen an den Lenkrädern aussehen kann, damit die Lenkfunktion erhalten bleibt.

Die JP2003225259 offenbart fest montierte, parallel zu den Lenkrädern angeordnete Skis, welche das Einsinken des Rollstuhls im Beinbereich eines Rollstuhlfahrers aufgrund grosser Laufflächen unterbinden können. Die gezeigte Fahrhilfe ist aber nicht einfach und schnell montier-/demontierbar gestaltet.

I n d er FR2655273 wird ein Ski beschrieben, welcher mit entsprechenden Ausnehmungen zur Befestigung an den Antriebs- und Lenkrädern eines Rollstuhls lösbar einfach und schnell befestigbar ist. Durch diesen Anbau ist ein Rollstuhl über den Schnee bewegbar. Da aber auch die Antriebsräder durch den Ski bedeckt sind kann der Rollstuhl nur noch durch eine Begleitperson fortbewegt werden. Eine simple Verkürzung kommerziell erhältlicher Skis und die Anbringung, sodass statt der Lenkräder die Laufflächen der Skier in Kontakt mit dem Untergrund kommen würden, verringert zwar das Einsinken der Lenkräder wodurch eine Fahrhilfe erreicht wird, bewirkt aber keine Lenkhilfe.

Die japanische Anmeldung JP2000232996 offenbart eine Fahrhilfe, welche bewegbar im Bereich der Räder eines Rollstuhls angebracht ist und bei Bedarf mit dem weichen unbefestigtem Untergrund in Kontakt bringbar ist. Die Fahrhilfe ist mit einer Vorrichtung derart an der Radaufhängung befestigt, dass sie mittels Hebel absenkbar und anhebbar ist, wobei die Räder bei aufgesetzter Fahrhilfe weiterhin in Kontakt mit dem Untergrund gehalten sind. Damit ist die auf dem Untergrund laufende Auflagefläche des Rollstuhls vergrössert und ein Einsinken kann verhindert werden. Die beschriebene Fahrhilfe muss aber fest am Rollstuhl fixiert sein, um im Bedarfsfall verwendbar zu sein. Entsprechend muss ein erhöhtes Rollstuhlgewicht bewegt werden auch wenn der Rollstuhl auf ebenem Untergrund in Innenräumen bewegt wird.

Um das Fahren und Lenken von Rädern eines Kinderwagens, insbesondere auf Schnee und Eis zu ermöglichen, offenbart die US2589602 eine Fahr- und Lenkhilfe mit einem Radaufnahmegehäuse, angeordnet auf der Oberfläche einer Kufe. Das Rad wird auf der Oberfläche der Kufe, teilweise von dem Radaufnahmegehäuse umgeben, befestigt. Das Rad ist damit vom Boden beabstandet auf der Oberfläche der Kufe gelagert. Die Radachse und ein Teil der Radaufhängung ragen in eine Achsenaussparung des Radaufnahmegehäuses. Das Rad wird durch eine zungenartige Feder lösbar im Radaufnahmegehäuse fixiert, wobei eine Schraube die Feder in Position hält. Das Radaufnahmegehäuse muss für die verwendeten Raddurchmesser sowie Radbreiten ausgerichtet sein, damit das Rad einführbar ist. Damit muss je nach Fahrzeug und entsprechender Radwahl eine entsprechende Fahr- und Lenkhilfe beschafft werden. Wenn die Grösse des Radaufnahmegehäuses nicht exakt auf den Raddurchmesser abgestimmt ist, kann das Rad in Längsrichtung des Gehäuses und damit während der Fahrt in Fahrtrichtung minimal bewegt werden, was zu einer instabilen Fortbewegung führt. Die Befestigung im Radaufnahmegehäuse muss entsprechend auf die Radgrösse angepasst werden. Gemäss der US2589602 ist das Rad lösbar befestigbar, indem zum Beispiel eine Flügelschraube manuell einschraubbar ist. Um einen ausreichenden Druck der zungenartigen Feder auf einen Teil des Umfangs des Rades zu gewährleisten, muss der Aufbau des Radaufnahmegehäuses ausreichend hoch ausgeführt sein. Nur dann ist ein Herausrutschen des Rades nach oben, von der Oberfläche der Kufe weg, vermeidbar. Die Aufbauhöhe ist wie dargestellt höher als der Radius des Rades zu wählen. Entsprechend resultiert eine unhandliche Fahr- und Lenkhilfe, welche sperrig bei Nichtgebrauch zu transportieren ist.

Eine andere Vorrichtung zur Ermöglichung der Fortbewegung, beispielsweise eines Rollstuhls auf Schnee, geht aus der DE19513993 hervor. Darin wird eine Radaufnahme mit einer Aussparung offenbart, in welcher unterschiedlich grosse Räder, beispielsweise auch verschwenkbare Räder eines Rollstuhls lösbar fixiert lagerbar wären. Nach Befestigung der Radaufnahme auf einem nicht näher definierten Ski, ist diese Vorrichtung als Fahrhilfe zur Forbewegung von Kinderwagen auf Schnee einsetzbar. Der beschriebene Befestigungsmechanismus, zur Fixierung der Räder in der Radaufnahme, weist eine Vielzahl von teilweise losen Bauteilen auf, was den Komfort der Befestigung verringert. Die vorgestellte Gesamtvorrichtung aus Ski und Radaufnahmen ist eher klobig bzw. unhandlich.

Möchte beispielsweise eine gehandicapte Person in einem Rollstuhl, die Lenkräder des Rollstuhls in Radaufnahmen dieser Art befestigen, wird das nicht ohne Weiteres möglich sein. Noch dazu, wenn ein Rollstuhlfahrer während der Montage im Rollstuhl sitzen bleiben möchte. Eine Befestigung aus dem Rollstuhl heraus scheint mit einer Hand unmöglich und insgesamt wenig komfortabel.

### Darstellung der Erfindung

Die vorliegende Erfindung hat sich zur Aufgabe gestellt eine anwenderfreundlichere kompakte und vor allem bei winterlichen Bedingungen vereinfacht befestigbare Fahr- und Lenkhilfe für mindestens zweirädrige Fahrzeuge, insbesondere für Rollstühle zu schaffen, welche robust, kompakt, leicht und platzsparend zu transportieren ist und eine gezielt gerichtete Fortbewegung eines Rollstuhls auf unbefestigtem losen Untergrund wie Schnee und Sand ermöglicht.

Eine weitere Aufgabe ist die Möglichkeit der einfachen Fixierung unterschiedlich breiter Räder mit Hilfe der Fahr- und Lenkhilfe, welche an kommerziell erhältlichen Fahrzeugen ohne grössere Anpassungen entsprechend dem aktuellen Untergrund schnell befestigbar ist.

Die vorliegende Fahr- und Lenkhilfe weist eine flache Bauhöhe auf, wobei der verwendete Verschlussmechanismus auf der Oberfläche der Kufe angeordnet mindestens ein Rad in Querrichtung zentriert klemmend hält. Der Verschluss erlaubt die Fixierung unterschiedlich breiter Räder, wobei ein Ausgleichselement verwendet wird.

Durch die Benutzung der Fahr- und Lenkhilfe ist beinahe eine Lenkbarkeit beispielsweise eines Rollstuhls wie auf befestigten und ebenen Untergründen erreichbar, da die Schwenkbeweglichkeit des Rades nicht durch die Fahr- und Lenkhilfe eingeschränkt wird.

### Kurze Beschreibung der Zeichnungen

Der Erfindungsgegenstand wird nachstehend im Zusammenhang mit den anliegenden Zeichnungen am Beispiel von Fahr- und Lenkhilfen für Räder von Rollstühlen beschrieben.
- Figur 1a: zeigt eine Seitenansicht eines gewöhnlichen Rollstuhls, während
- Figur 1b: den Rollstuhl gemäss Figur 1a mit montierter Fahr- und Lenkhilfe in einer Seitenansicht zeigt.
- Figur 2: zeigt eine Fahr- und Lenkhilfe an einem Rad in einer Seitenansicht mit geschlossenem Verschlussmechanismus und eingeklemmtem Rad, während
- Figur 3: eine Schnittansicht entlang der Linie A - A' aus Figur 2 zeigt.
- Figur 4: zeigt eine perspektivische Ansicht einer Fahr- und Lenkhilfe mit einem Radaufnahmegehäuse an welchem ein Verschlussmechanismus im Form eines Excenterverschlusses angeordnet ist in geschlossener Stellung ohne Rad.

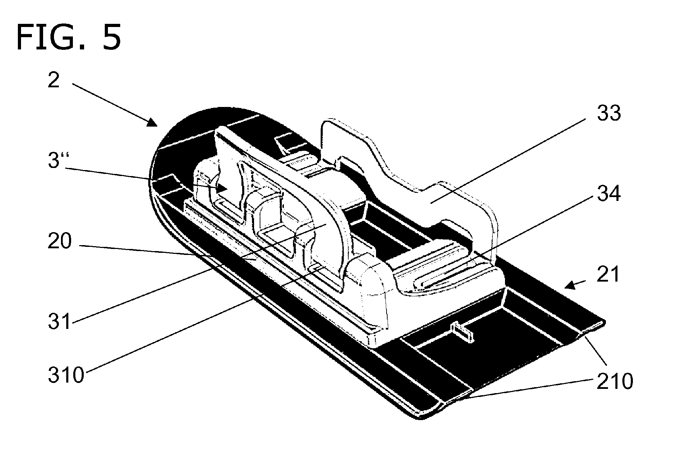

- Figur 5: zeigt eine perspektivische Ansicht der Fahr- und Lenkhilfe gemäss Figur 4.

### Beschreibung

Im Folgenden wird eine Fahr- und Lenkhilfe 2 offenbart, welche beispielhaft an einen Rollstuhl 1 bekannter Art, umfassend einen Sitz 12, ein Rad 10 und ein Antriebsrad 11 einfach und schnell montierbar ist.

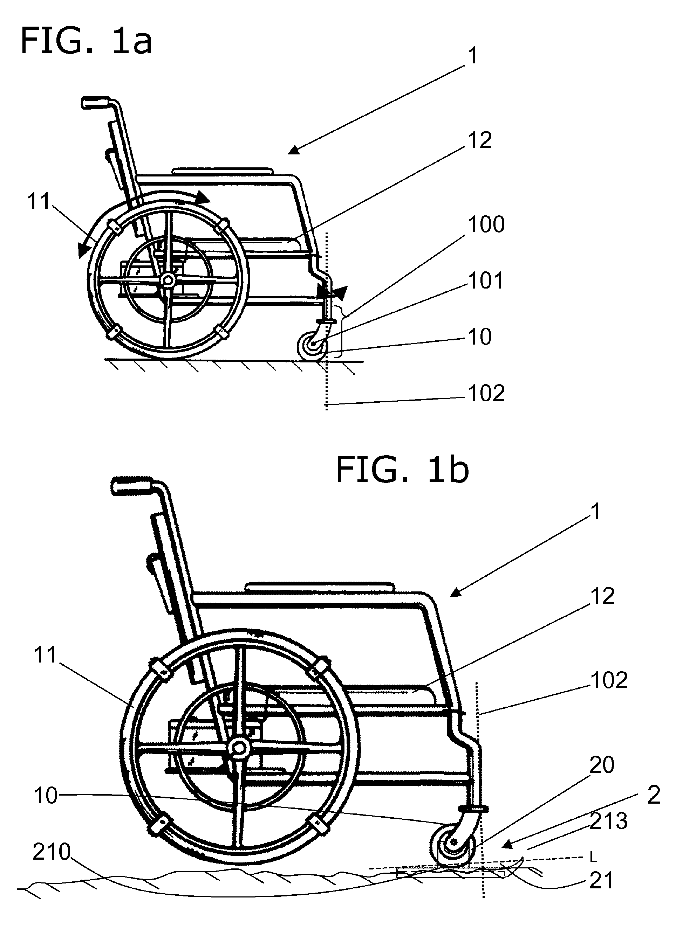

Wird der Rollstuhl 1, wie in Figur 1a ersichtlich, auf einem harten ebenen Untergrund fortbewegt, sind die Antriebsräder 11 und die Räder 10 mit dem Untergrund in Kontakt. Die Räder 10 sind bekanntermassen einzeln mittels Lenkradaufhängung 100 aufgehängt und um eine Schwenkachse 102 verschwenkbar gelagert, während sie um eine Lenkradachse 101 rotierbar sind. Ein Rollstuhlfahrer kann so mühelos über einen ebenen Untergrund rollen, wobei die Antriebsräder 11 den Vorschub leisten und die Räder 10 eine gezielte Navigation erlauben.

Zur Erleichterung der Fortbewegung auf einem unbefestigten losen oder weichen Untergrund, beispielsweise Schnee oder auch Sand, steinigem Sand, Schutt oder Schotter, ist eine Fahr- und Lenkhilfe 2 einfach an mindestens einem der Räder 10 montierbar. Die Fahr- und Lenkhilfe 2 ist lösbar an den Rädern 10 befestigbar, wobei das Rad 10 mindestens teilweise in einem Radaufnahmegehäuse 20 unterbringbar ist. An das Radaufnahmegehäuse 20 schliesst sich eine Kufe 21 an, welche direkt mit dem Untergrund in Kontakt ist und sich in Längsrichtung L von einer Kufenspitze 213 bis zu einem Kufenende erstreckt. Die Verschwenkung der Fahr- und Lenkhilfe 2 und des in das Radaufnahmegehäuse 20 eingeführten Rades 10 kann wie gewohnt um die Schwenkachse 102 stattfinden, wodurch die Fahr- und Lenkhilfe 2 eine präzise und gezielte Lenkung des Rollstuhls 1 erlaubt.

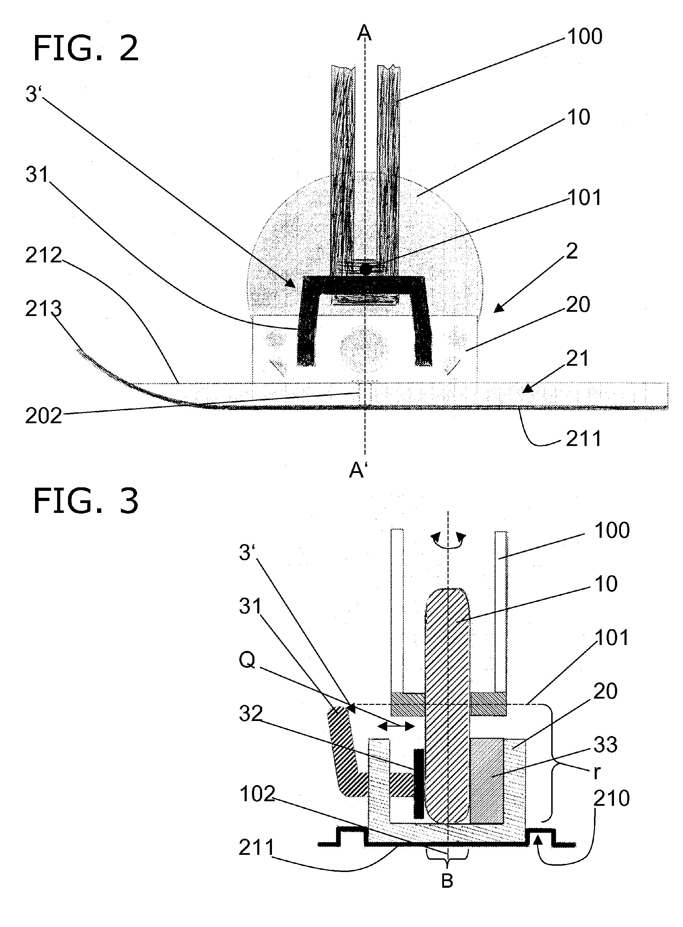

Eine detaillierte Darstellung der erfindungsgemässen Fahr- und Lenkhilfe 2 ist in Figur 2 gezeigt.

Das Radaufnahmegehäuse 20 weist im Wesentlichen eine U-Profilform auf und ist auf einer Oberfläche 212 der Kufe 21 befestigt. Zur Befestigung sind Gehäusebefestigungsmittel 202 in Figur 2 angedeutet, welche das Radaufnahmegehäuse 20 auf der Oberfläche 212 der Kufe 21 fixieren.

Das Rad 10 wird auf eine Bodenplatte des Radaufnahmegehäuses 20 platziert und dort um die Lenkradachse 101 drehfest lösbar befestigt gehalten, wobei das Rad 10 durch die Kufe 21 vom Untergrund beabstandet und getrennt angeordnet ist. Die an der Fahr- und Lenkhilfe 2 angeformte oder befestigte Kufe 21 bleibt mit der Radaufhängung 100 um die Schwenkachse 102 verschwenkbar, sodass beim Fahren auf Schnee die gewünschte Richtung angesteuert werden kann.

Um das Rad 10 ortsfest in der Fahr- und Lenkhilfe 2 zu halten ist ein Verschlussmechanismus 3' vorgesehen, welcher eine kraftschlüssige Fixierung des Rades 10 im Radaufnahmegehäuse 20 ermöglicht. Dieser Verschlussmechanismus 3' umfasst ein Betätigungselement 31, welches hier als Hebel 31 ausgestaltet ist, ein Stempelelement 32 und ein Ausgleichselement 33. Der Verschlussmechanismus 3' ist mit dem Radaufnahmegehäuse 20 wirkverbunden angeordnet und erlaubt das, das Rad 10 flächig unterhalb der Radachse 101 geklemmt gehalten wird.

Ist ein Rad 10 im Radaufnahmegehäuse 20 zentrisch in Querrichtung Q der Kufe 21 platziert, erlaubt der Verschlussmechanismus 3' das Festklemmen des Rades 10 im Radaufnahmegehäuse 20 durch Betätigung des Hebels 31. Durch die Verschwenkung des Hebels 31 wird das Stempelelement 32 linear in Querrichtung Q der Kufe 21 in Richtung Rad 10 verschoben, sodass das Stempelelement 32 das Rad 10 mindestens teilweise gegen das Ausgleichselement 33 und/oder eine Seitenwand des Radaufnahmegehäuses 20 drückt.

Der Verschlussmechanismus 3' verbindet einen Teil des Rades 10 unterhalb der Radachse 101 mit dem Ausgleichselement 33 und damit indirekt mit der Seitenwand des Radaufnahmegehäuses 20. Die Klemmung findet damit in einem Bereich kleiner als der Radius r des Rades 10 statt, somit kommt die Radaufhängung 100 nicht mit dem Radaufnahmegehäuse 20 oder dem Verschlussmechanismus 3' in Berührung.

Um das Rad 10 möglichst zentral im Radaufnahmegehäuse 20 zu befestigen, ist das Ausgleichselement 33, welches an einer Seitenwand des Radaufnahmegehäuses 20 befestigt ist, vorteilhaft. Wenn das Rad 10 nicht zentrisch in Querrichtung Q ausgerichtet wird, zieht die Kufe 21 in eine Richtung und die Spurtreue der Fahr- und Lenkhilfe 2 ist nicht ausreichend.

Je nach Breite B des Rades 10 wird ein Ausgleichselement 33 mit abgestimmter fester Breite eingesetzt. Neben einer form- und/oder kraftschlüssigen Verbindung des Ausgleichselementes 33 mit dem Radaufnahmegehäuse 20 kann auch eine stoffschlüssige Verbindung, z.B. mittels Klebung erfolgen. Es ist auch möglich ein Radaufnahmegehäuse 20 nur aus Seitenwänden vorzusehen, wobei auf eine Bodenplatte verzichtet wird. Dann wird das Ausgleichselement 33 direkt auf der Oberfläche befestigt.

Damit das Rad 10 korrekt auf der Bodenplatte des Radaufnahmegehäuses 20 oder der Oberfläche 212 der Kufe 21 platziert wird, kann die Bodenplatte oder die Oberfläche 212 zum Zentrum hin angeschrägt ausgestaltet sein. In der resultierenden abgeschrägten Rinne kommt das Rad 10 dann automatisch in einer zentralen Gleichgewichtsposition in Längsrichtung L auf der Bodenplatte bzw. der Oberfläche 212 der Kufe 21 zum Stillstand und es braucht nur noch der Verschlussmechanismus 3' betätigt zu werden.

Als Alternativen zum hier gezeigten Verschlussmechanismus 3' kann auch eine vom Fahrrad bekannte Schnellspannvorrichtung eingesetzt werden, wobei auch dort eine Hebelbewegung die Fixierung des Rades 10 bewerkstelligt, indem eine Schwenkbewegung in eine Linearbewegung umgesetzt wird.

Mit der Ausführungsform des Radaufnahmegehäuses 20 gemäss Figuren 2 und 3 ist eine verringerte Aufbauhöhe des Radaufnahmegehäuses 20 erreichbar, wobei ein minimaler Abstand zwischen Lenkradachse 101 und der Oberfläche 212 der Kufe 21 erreichbar ist. Damit ist im Fall eines Rollstuhls 1 eine verringerte Neigung des Rollstuhls 1 bei montierten Fahr- und Lenkhilfen 2 erreichbar. Durch die geringe Aufbauhöhe kann die Fahr- und Lenkhilfe 2 einfach verstaut werden und weist nur einen geringen Platzbedarf auf.

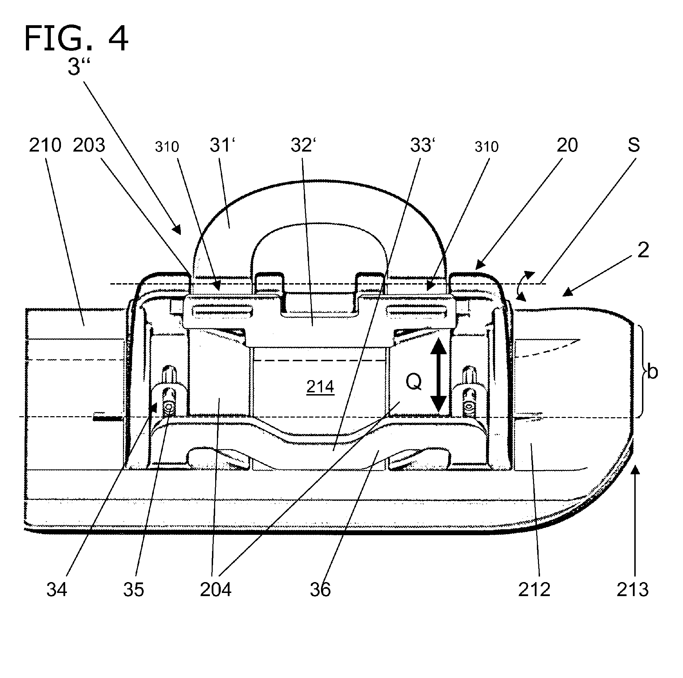

In Figur 4 ist eine weitere Ausgestaltung des Verschlussmechanismus 3" in Form eines Excenterverschlusses 3" in der Verschlussstellung dargestellt. Der Verschlussmechanismus 3" und das Radaufnahmegehäuse 20 sind durch nicht dargestellte Befestigungsmittel auf der Oberfläche 212 der Kufe 21 fixiert. Das Radaufnahmegehäuse 20 weist eine in Längsrichtung L beidseitig abgeschrägte Bodenfläche auf, welche zwei Schrägflächen 204 bilden. In die Oberfläche 212 der Kufe 21 ist eine Mulde 214 eingeformt, sodass ein Rad 10 zwischen den Schrägflächen 204 in der Mulde 214 lagerbar ist.

In einer Seitenwand sind Gehäuseaussparungen 203 vorgesehen, in welchen ein Betätigungselement 31' in Form eines Excenterhebels 31' angeordnet ist. Der Excenterhebel 31' ist um eine Verschlussschwenkachse S verschwenkbar gelagert. Es sind zwei Excenterbereiche 310 dargestellt, welche beim Verschwenken des Excenterhebels 31' in Richtung des Zentrums der Kufe 21 verschwenkt werden.

Das Stempelelement 32' ist als bewegbare Platte ausgeführt, welche an der Kufe 21 oder dem Radaufnahmegehäuse 20 verkippbar befestigt ist. Das Stempelelement 32' ist auf der Seite des Radaufnahmegehäuses 20 angeordnet, an welcher der Excenterhebel 31' gelagert ist, damit ein Zusammenwirken möglich ist.

Auf der dem Excenterhebel 31' gegenüberliegenden Seite des Radaufnahmegehäuses 20 ist ein in Querrichtung Q bewegbares Ausgleichselement 33' angeordnet. Das Ausgleichselement 33' umfasst neben einer Wand 36, Führungsschienen 34, welche in Aussparungen innerhalb der Bodenfläche des Radaufnahmegehäuses 20 verschiebbar sind. Ist ein gewünschter Abstand b zwischen Stempelelement 32' und gegenüberliegendem variablen Ausgleichselement 33' in Querrichtung Q eingestellt, können die Führungsschienen 34 mit Befestigungsmitteln 35 fixiert werden. Diese Einstellung des Abstandes b muss für die später zu befestigenden Räder 10 einmalig durchgeführt werden, wobei der Verschlussmechanismus 3" zwangsläufig in der Offenstellung sein muss.

In der hier dargestellten Ausführungsform ist auf der, dem Stempelelement 32' gegenüberliegenden Seite des Radaufnahmegehäuses keine Seitenwand vorgesehen. Dies wäre aber in einer anderen Ausgestaltung möglich, wobei eine solche Seitenwand als Anschlag bei maximalem Abstand b dienen könnte und die Verschiebbarkeit der Führungsschienen 34 entsprechend begrenzt.

In einer weiteren Variante kann nur eine Führungsschiene 34 vorgesehen sein, welche eine Einstellung eines gewünschten Abstandes b erlaubt. Auch die Verwendung eines Excenterhebels 31' mit nur einem Excenterbereich 310 ist möglich.

Zur Fixierung eines Rades 10 in der Fahr- und Lenkhilfe 2 wird der Verschlussmechanismus 3" in die Offenstellung bewegt und das Rad 10 auf die Oberfläche 212 der Kufe 21 bewegt. Eine Längsausrichtung ist durch die Mulde 214 und die Schrägflächen 204 erreichbar. Damit das Rad in Querrichtung Q zentrisch ausgerichtet ist, wird das Ausgleichselement 33' entsprechend bewegt, dass der Abstand b der Breite B des Rades 10 entspricht. Dieser Abstand b wird durch die Fixierung der Führungsschienen 34 mit den Befestigungsmitteln 35 gehalten. Durch Verschwenkung des Excenterhebels 31' drückt der mindestens eine Excenterbereich 310 das Stempelelement 32' mindestens teilweise gegen das Rad 10, welches so zwischen dem Stempelelement 32' und der gegenüberliegenden Wand 36 kraftschlüssig fixiert wird. Mittels des Verschlussmechanismus 3' wird das Rad 10 innerhalb des Radaufnahmegehäuses 20 flächig in Querrichtung Q gegen die Wand 36 geklemmt. Diese lösbare Verbindung wird unterhalb der Radachse A und damit in einem Bereich kleiner als der Radius r des Rades 10 erreicht.

Das Radaufnahmengehäuse 20 ist auf der Kufe 21 mittels Gehäusebefestigungsmitteln 202 befestigt. Die in Figur 2 dargestellten Gehäusebefestigungsmittel 202 sind Schrauben 202, welche eine form- und/oder kraftschlüssige Verbindung des Radaufnahmegehäuses 20 mit der Kufe 21 garantieren. Es ist auch möglich die Fahr- und Lenkhilfe 2 einstückig auszuführen oder die Kufe 21 fest stoffschlüssig mit dem Radaufnahmegehäuse 20 zu verbinden. Eine einstückige Ausgestaltung der Fahr- und Lenkhilfe 2 ist beispielsweise mittels Kunststoffspritzguss aus geeignetem Kunststoffmaterial ausreichender Festigkeit erreichbar. Die gesamte Lenkradaufhängung 100 ist samt Fahr- und Lenkhilfe 2 weiterhin um die Schwenkachse 102 schwenkbar, wodurch die Fahr- und Lenkhilfe 2 in gewünschte Ausrichtungen verschwenkbar ist und die Kufenspitze 213 der Kufe 21 in die jeweilige gewünschte Fahrtrichtung ausrichtbar ist.

Um eine gezielte Lenkung von schwenkbeweglichen Rädern 10 zu ermöglichen, ist die Kufe 21 mit einem Führungsmittel 210 versehen, welches im Bereich der Lauffläche 211 unterhalb der dem Rollstuhl zugewandten Oberfläche 212 angeordnet ist. Das Führungsmittel 210 erstreckt sich mindestens teilweise in Längsrichtung von der Kufenspitze 213 bis zum gegenüberliegenden Ende der Kufe 21 und ist an die Kufe 21 angeformt oder an der Kufe 21 befestigt. Durch die Anordnung des Führungsmittels 210 wird das Rad 10 in eine Vorzugsrichtung ausgelenkt und es ist eine vereinfachte Lenkung der Radaufhängung 100 und damit des Rollstuhls 1 möglich, da eine Führung der Kufe 21 auf dem weichen Untergrund erfolgt. Der lose Untergrund wird durch das Führungsmittel 210 verdrängt, wobei die Orientierung des Führungsmittels 210 die Richtungsänderung der Kufe 21 und damit des Rollstuhls 1 vorgibt.

Das Führungsmittel 210 kann aus der Kufe 21 ausgespart sein. Das Führungsmittel 210 erstreckt sich annähernd über die gesamte Länge der Lauffläche 211 und hat die Form mindestens einer Längsnut 210 oder mindestens eines Kanals 210. Das Führungsmittel 210 kann aber auch in Form einer Finne oder eines Kiels von der Lauffläche 211 in Richtung des Untergrundes abstehen. Durch das vorgesehene Führungsmittel 210, welches in direktem Kontakt mit dem Untergrund ist, wird der Rollstuhl 1 gelenkt.

Eine mögliche Ausführungsform der Lauffläche 211 der Kufe 21 ist wie in Figur 3 und 4 gezeigt, mit zwei parallelen Führungsmitteln 210 in Form zweier Kanäle 210 oder Längsnuten 210 versehen, um die Richtungsbestimmung zu erreichen.

Bei montierter lösbar befestigter Fahr- und Lenkhilfe 2 ist ein lenkbares Gleiten der Räder 10 auf dem losen weichen Untergrund möglich, während der Antrieb wie gewohnt mit Hilfe der grösseren Antriebsräder 11 des Rollstuhls 1 durchführbar ist. Während die Räder 10 aufgrund der Fahr- und Lenkhilfe 2 vom Untergrund beabstandet und nicht mehr mit diesem in Kontakt sind, ist der Rollstuhl 1 wie gewohnt antreibbar. Dabei schützt die Kufe 21 die Räder 10 vor dem Kontakt mit dem losen Untergrund, sodass kein Schnee oder Sand mit den Rädern 10 in Kontakt kommen kann. Eine Schrägstellung des Rollstuhls 1 bei montierten Fahr- und Lenkhilfen 2 ist aufgrund der Benutzung des Radaufnahmegehäuses 20 nicht für die Fortbewegung des Rollstuhls 1 problematisch.

Mit der offenbarten Fahr- und Lenkhilfe 2 können beispielsweise auch schwenkbewegbare oder schwenkstarre Räder von Fahrzeugen wie Kinderwagen, Gehhilfen für Senioren oder Spielzeugen wie Tretrollern bestückt werden, womit diese Fahrzeuge auch auf Schnee oder anderen unbefestigten losen Untergründen gesteuert fortbewegbar sind.

### Bezugszeichenliste

- 1: Rollstuhl
10 Rad
100 Radaufhängung
101 Radachse
102 Schwenkachse
11 Antriebsrad
12 Sitz
- 2: Fahr- und Lenkhilfe
20 Radaufnahmegehäuse
201 Achsenaussparung
202 Gehäusebefestigungsmittel
203 Gehäuseaussparung
204 Schrägfläche
21 Kufe
210 Führungsmittel (Finne, Kiel oder Kanal, Längsnut)
211 Lauffläche
212 Oberfläche (der Kufe)
213 Kufenspitze
214 Mulde
- 3': Verschlussmechanismus/ Excenterverschluss
31 Betätigungselement (Hebel, Excenterhebel)
310 Excenterbereich
32 Stempelelement
33 Ausgleichselement
34 Führungsschiene
35 Befestigungsmittel

- S: Verschlussschwenkachse
- L: Längsrichtung
- Q: Querrichtung
- B: Breite des Rades
- r: Radius des Rades
- b: Abstand

## Patentansprüche

1. Fahr- und Lenkhilfe (2) zur Montage an einem verschwenkbaren Rad (10), umfassend ein Radaufnahmegehäuse (20) welches von einer Kufe (21) mit einer Lauffläche (211) von einer Oberfläche (212) der Kufe (21) wegragend angeordnet ist und die Kufe (21) zur Richtungsbestimmung mindestens ein Führungsmittel (210) im Bereich der Lauffläche (211) aufweist, welches mit dem Untergrund in Kontakt ist, sodass das Rad (10) vom Untergrund getrennt beabstandet anordbar ist, womit das Gleiten über einen weichen oder losen Untergrund erreichbar ist,
wobei
das Rad (10) mittels eines Verschlussmechanismus (3', 3") flächig geklemmt unterhalb der Radachse (A) kraftschlüssig im Radaufnahmegehäuse (20) befestigbar ist, wobei die Klemmkraft in Querrichtung (Q) zum Rad (10) und der Fahr-und Lenkhilfe (2) wirkt, mindestens ein Stempelelement (32') mittels Verschlussmechanismus (3', 3") betätigbar ist, wodurch das Rad (10) im Radaufnahmegehäuse (20) drehfest und lagefixiert gehalten werden kann und wobei eine Verschwenkung der Fahr- und Lenkhilfe (2) um die Schwenkachse (102) des Rades (10) erfolgen kann,
**dadurch gekennzeichnet, dass**
der Verschlussmechanismus (3") in Form eines Excenterverschlusses (3") gebildet ist, welcher einen Excenterhebel (31') aufweist, der um eine Verschlussschwenkachse (S) verschwenkbar ist, mittels welchem das mindestens eine Stempelelement (32') in Querrichtung (Q) in Richtung einer gegenüberliegenden Wand (36) bewegbar ist, wodurch das Rad (10) im Radaufnahmegehäuse (20) drehfest und lagefixiert gehalten werden kann.

2. Fahr- und Lenkhilfe (2) gemäss Anspruch 1, wobei ein Ausgleichselement (33, 33') im Radaufnahmegehäuse (20) vorgesehen ist, durch welches die Zentrierung des Rades (10) in Querrichtung (Q) im Radaufnahmegehäuse (20) erreichbar ist.

3. Fahr- und Lenkhilfe (2) gemäss Anspruch 2, wobei das Ausgleichselement (33) ein Block mit fester Breite ist.

4. Fahr- und Lenkhilfe (2) gemäss Anspruch 2, wobei das Ausgleichselement (33') eine Wand (36) und eine Führungsschiene (34) umfasst und im Radaufnahmegehäuse (20) bewegbar gelagert ist.

5. Fahr- und Lenkhilfe (2) gemäss Anspruch 1, wobei das Radaufnahmegehäuse (20) eine Bodenplatte aufweist, auf welchem das Rad (10) ruhend, mittels Verschlussmechanismus (3', 3") lösbar befestigt gehalten ist.

6. Fahr- und Lenkhilfe (2) gemäss Anspruch 5, wobei die Bodenplatte mindestens an einer Seite in Längsrichtung (L) abgeschrägt ist und mindestens eine Schrägfläche (204) aufweist, sodass das Rad (10) auf eine Vorzugsposition gezwungen wird.

7. Fahr- und Lenkhilfe (2) gemäss Anspruch 1, wobei das Rad (10) direkt auf der Oberfläche (212) der Kufe (21) lagernd in Querrichtung (Q) vom Verschlussmechanismus (3') gehalten angeordnet ist.

8. Fahr- und Lenkhilfe (2) gemäss Anspruch 6 oder 7, wobei in der Kufe (21) oder in der Bodenplatte eine Mulde (214) zur Lagerung des Rades (10) vorgesehen ist.

9. Fahr- und Lenkhilfe (2) gemäss Anspruch 7, wobei mindestens eine Schrägfläche (204) auf der Oberfläche (212) der Kufe (21) angeordnet ist.

10. Fahr- und Lenkhilfe (2) gemäss einem der vorhergehenden Ansprüche, wobei die Kufe (21) und das Radaufnahmegehäuse (20) einstückig ausgeführt sind.

11. Fahr- und Lenkhilfe (2) gemäss einem der Ansprüche 1 bis 9, wobei die Kufe (21) und das Radaufnahmegehäuse (20) form- und/oder kraftschlüssig mittels Gehäusebefestigungsmitteln (202) und/oder stoffschlüssig miteinander verbunden sind.

12. Fahr- und Lenkhilfe (2) gemäss Anspruch 1, wobei das Führungsmittel (210) in Form einer Längsnut oder eines Kanals im Wesentlichen in Richtung der Längsachse der Kufe (21) verlaufend in der Kufe (21) ausgebildet ist.

13. Fahr- und Lenkhilfe (2) gemäss Anspruch 1, wobei das Führungsmittel (210) in Form einer Finne oder eines Kiels von der Lauffläche (211) der Kufe (21) in Richtung Untergrund wegragend ausgebildet ist.

## Claims

1. A driving and steering aid (2) for mounting on a pivotable wheel (10), comprising a wheel retaining housing (20) which is arranged to project away from a runner (21) having a running surface (211) of a surface (212) of the runner (21) and the runner (21) has at least one guide means (210) in the region of the running surface (211) for directional determination, which is in contact with the ground so that the wheel (10) can be arranged at a distance separate from the ground, with the result that sliding over soft or loose ground can be achieved,
wherein
the wheel (10) can be fastened non-positively in the wheel retaining housing (20) clamped flat below the wheel axle (A) by means of a locking mechanism (3', 3") wherein the clamping force acts in the transverse direction (Q) to the wheel (10) and the driving and steering aid (2), at least one stamp element (32') can be actuated by means of the locking mechanism (3', 3") whereby the wheel (10) can be held in a torque-proof manner and fixed in position in the wheel retaining housing (20) and wherein a pivoting of the driving and steering aid (2) about the pivot axis (102) of the wheel (10) can be accomplished,
**characterized in that**
the locking mechanism (3") is formed in the form of an eccentric closure (3") which has an eccentric lever (31') which is pivotable about a closure pivot axis (S) by means of which the at least one stamp element (32') is movable in the transverse direction (Q) in the direction of an opposite wall (36), whereby the wheel (10) can be held in a torque-proof manner and fixed in position in the wheel retaining housing (20).

2. The driving and steering aid (2) according to claim 1, wherein a compensating element (33, 33') is provided in the wheel retaining housing (20) by which means the centring of the wheel (10) in the transverse direction (Q) in the wheel retaining housing (20) can be achieved.

3. The driving and steering aid (2) according to claim 2, wherein the compensating element (33) is a block having fixed width.

4. The driving and steering aid (2) according to claim 2, wherein the compensating element (33') comprises a wall (36) and a guide rail (34) and is movably mounted in the wheel retaining housing (20).

5. The driving and steering aid (2) according to claim 1, wherein the wheel retaining housing (20) comprises a base plate on which the wheel (10) resting, is held detachably fastened by means of the locking mechanism (3', 3").

6. The driving and steering aid (2) according to claim 5, wherein the base plate is sloping at least on one side in the longitudinal direction (L) and has at least one sloping surface (204) so that the wheel (10) is forced onto a preferential position.

7. The driving and steering aid (2) according to claim 1, wherein the wheel (10) is held in the transverse direction (Q) by the locking mechanism (3') mounted directly on the surface (212) of the runner (21).

8. The driving and steering aid (2) according to claim 6 or 7, wherein a depression (214) for mounting the wheel (10) is provided in the runner (21) or in the base plate.

9. The driving and steering aid (2) according to claim 7, wherein at least one sloping surface (204) is arranged on the surface (212) of the runner (21).

10. The driving and steering aid (2) according to any one of the preceding claims, wherein the runner (21) and the wheel retaining housing (20) are designed in one piece.

11. The driving and steering aid (2) according to any one of claims 1 to 9, wherein the runner (21) and the wheel retaining housing (20) are connected to one another positively and/or non-positively by means of housing fastening means (202) and/or seamlessly.

12. The driving and steering aid (2) according to claim 1, wherein the guide means (210) is configured in the form of a longitudinal groove or a channel running in the runner (21) substantially in the direction of the longitudinal axis of the runner (21).

13. The driving and steering aid (2) according to claim 1, wherein the guide means (210) is configured in the form of a fin or a keel projecting away from the running surface (211) of the runner (21) in the direction of the ground.

## Revendications

1. Assistance à la conduite et à la direction (2), destinée à être montée sur une roue (10) susceptible de pivoter, comprenant un carter de logement (20) de roue, lequel est placé en saillant à partir d'un patin (21) avec une surface de roulement (211), d'une surface (212) du patin (21) et pour déterminer la direction, le patin (21) comporte dans la région de la surface de roulement (211) au moins un moyen de guidage (210), lequel est en contact avec le sol, de sorte que la roue (10) puisse être placée en étant séparée et écartée du sol, suite à quoi, on peut obtenir un glissement sur un sol mou ou instable,
la roue (10) pouvant être fixée, en étant serrée à pleine surface sous l'essieu de roue (A), au moyen d'un mécanisme de blocage (3', 3"), par complémentarité de force dans le carter de logement (20) de roue, la force de serrage agissant dans la direction transversale (Q) par rapport à la roue (10) et à l'assistance à la conduite et à la direction (2), au moins un élément formant tampon (32') pouvant être actionné au moyen du mécanisme de blocage (3' , 3"), suite à quoi, la roue (10) peut être maintenue de manière solidaire en rotation et fixée dans sa position dans le carter de logement (20) de la roue et un pivotement de l'assistance à la conduite et à la direction (2) pouvant s'effectuer autour de l'axe de pivotement (102) de la roue (10),
**caractérisée en ce que**
le mécanisme de blocage (3") est créé sous la forme d'un blocage excentrique (3"), lequel comporte un levier excentrique (31'), qui est susceptible de pivoter autour d'un axe de pivotement (S) d'excentrique, au moyen duquel l'au moins un élément formant tampon (32') est mobile dans la direction transversale (Q), en direction d'une paroi (36) opposée, suite à quoi, la roue (10) peut être maintenue de manière solidaire en rotation et fixée dans sa position dans le carter de logement (20) de roue.

2. Assistance à la conduite et à la direction (2) selon la revendication 1, un élément compensateur (33, 33') dans la carter de logement (20) permettant d'obtenir un centrage de la roue (10) dans la direction transversale (Q) étant prévu dans la carter de logement (20) de roue.

3. Assistance à la conduite et à la direction (2) selon la revendication 2, l'élément compensateur (33) étant un bloc de largeur fixe.

4. Assistance à la conduite et à la direction (2) selon la revendication 2, l'élément compensateur (33') comprenant une paroi (36) et un rail de guidage (34) et étant logé en étant mobile dans le carter de logement (20) de roue.

5. Assistance à la conduite et à la direction (2) selon la revendication 1, le carter de logement (20) de roue comportant une plaque de base sur laquelle la roue (10) au repos est maintenue de manière fixée mobile, au moyen du mécanisme de blocage (3', 3").

6. Assistance à la conduite et à la direction (2) selon la revendication 5, la plaque de base étant biseautée en direction longitudinale (L) au moins sur un côté et comportant au moins un surface inclinée (204), de sorte que la roue (10) soit forcée dans une position préférentielle.

7. Assistance à la conduite et à la direction (2) selon la revendication 1, la roue (10) étant maintenue en étant logée en direction transversale (Q) directement sur la surface (212) du patin (21) par le mécanisme de blocage (3').

8. Assistance à la conduite et à la direction (2) selon la revendication 6 ou 7, dans le patin (21) ou dans la plaque de base étant prévue une cavité (214) pour le logement de la roue (10).

9. Assistance à la conduite et à la direction (2) selon la revendication 7, au moins une surface inclinée (204) étant placée sur la surface (212) du patin (21).

10. Assistance à la conduite et à la direction (2) selon l'une quelconque des revendications précédentes, le patin (21) et le carter de logement (20) de roue étant réalisés en monobloc.

11. Assistance à la conduite et à la direction (2) selon l'une quelconque des revendications 1 à 9, le patin (21) et le carter de logement (20) de roue étant reliés l'un à l'autre par complémentarité de forme et/ou par complémentarité de force par des moyens de fixation (202) de carter et/ou par matière.

12. Assistance à la conduite et à la direction (2) selon la revendication 1, le moyen de guidage (210) étant conçu dans le patin (21) sous la forme d'une rainure longitudinale ou d'un canal s'étendant sensiblement en direction de l'axe longitudinal du patin (21).

13. Assistance à la conduite et à la direction (2) selon la revendication 1, le moyen de guidage (210) étant conçu sous la forme d'une panne ou d'une quille, en saillant de la surface de roulement (211) du patin (21) en direction du sol.
